# DEMANDE DE BREVET EUROPEEN

(11) **EP 4 851 592 A1**
(43) Date de publication de la demande: **09.12.2026**
(21) Numéro de dépôt: 26181235.8
(22) Date de dépôt: 27.05.2026
(51) Int. Cl.: G01J 5/02, G01J 5/08, G01J 5/10, G01J 5/20

(54) **DÉTECTEUR THERMIQUE À BRUIT DE PHONON RÉDUIT**

(30) Priorité: 03.06.2025 FR 2505943
(71) Demandeur: Commissariat à l'Energie Atomique et aux Energies Alternatives, 75015 Paris (FR)
(72) Inventeur: LE COCQ, Mélanie, 38054 GRENOBLE CEDEX 09 (FR); DUMONT, Geoffroy, 38054 GRENOBLE CEDEX 09 (FR); PERRILLAT-BOTTONET, Thomas, 38054 GRENOBLE CEDEX 09 (FR)
(74) Mandataire: Santarelli

(57) **Abrégé**

L'invention porte sur un détecteur thermique pour détecter un rayonnement électromagnétique, comportant : un substrat de lecture ; des bras d'isolation thermique ; une micro-planche suspendue au-dessus du substrat de lecture par les bras d'isolation thermique, comprenant un transducteur thermique, les bras d'isolation thermique. La micro-planche s'étendant dans un plan de détection du détecteur thermique. Le détecteur thermique comporte en outre un absorbeur couplé thermiquement au transducteur thermique, coopérant avec la micro-planche pour former une chambre close du détecteur thermique, intégralement remplie d'un matériau de remplissage électriquement isolant. Le détecteur thermique est tel que l'absorbeur comporte une région périphérique, et une région centrale s'étendant toutes deux parallèlement au plan de détection, la région centrale en vis-à-vis de la chambre close et la région périphérique en vis-à-vis des bras d'isolation thermique.

## Description

### DOMAINE TECHNIQUE

Le domaine de l'invention est celui des détecteurs thermiques d'un rayonnement électromagnétique, par exemple infrarouge ou térahertz. L'invention concerne également un procédé de fabrication d'un tel détecteur. Les détecteurs thermiques peuvent être utilisés dans des systèmes de vision nocturne, d'aide à la conduite, de domotique, de contrôle non destructif...

### ÉTAT DE LA TECHNIQUE ANTÉRIEURE

Un capteur thermique dans l'infrarouge comporte généralement un ensemble de détecteurs thermiques, par exemple des bolomètres de tailles micrométriques, disposés en matrice sur un substrat de lecture. La matrice de bolomètres est par exemple positionnée dans le plan focal d'un objectif optique, de sorte à imager une scène thermique sur celle-ci. Chaque bolomètre donne une information d'un pixel de l'image de la scène.

Un détecteur thermique de type bolomètre comporte généralement une micro-planche, deux bras d'isolation thermique et deux piliers d'ancrage. La micro-planche est suspendue au-dessus d'un substrat de lecture par les piliers d'ancrage et les bras d'isolation thermique. Ces derniers l'isolent thermiquement du substrat de lecture. Les piliers d'ancrage et les bras d'isolation thermique relient électriquement la micro-planche à un circuit de lecture situé dans et/ou sur le substrat de lecture. L'ensemble des micro-planches s'étend dans un plan, appelé ci-après plan de détection.

Le détecteur thermique peut comporter un absorbeur adapté pour absorber le rayonnement électromagnétique incident, et un transducteur thermique couplé thermiquement à l'absorbeur. Le transducteur thermique peut comporter un matériau thermorésistif de résistivité variable en fonction de la température, par exemple de l'oxyde de vanadium ou du silicium amorphe. Alternativement, le transducteur thermique peut comporter un transistor de mesure, par exemple de type MOS, ou encore une diode.

Les bras d'isolation thermique ont une fonction de connexion électrique, de maintien mécanique et d'isolation thermique. Ils doivent notamment être suffisamment robustes pour ne pas se déformer et être mécaniquement stables à des facteurs environnementaux comme des cycles thermiques, éventuellement pendant des étapes de fabrication, ou des vibrations. En même temps, les bras d'isolation thermique doivent être suffisamment longs, étroits et fins, pour atteindre une bonne isolation thermique. Ces deux objectifs contradictoires sont généralement atteints par un choix spécifique d'empilement de couches électriquement isolantes et conductrices permettant d'augmenter la résistance thermique R_{TH} des bras d'isolation thermique, sans compromettre leur résistance électrique et leur robustesse mécanique.

En outre, pour réduire les coûts de fabrication certaines couches des bras d'isolation thermique sont communes avec certains éléments de la micro-planche, permettant ainsi de mutualiser certaines étapes de fabrication. Dans ce cas de figure, les bras d'isolation thermique s'étendent nécessairement dans le même plan de détection que la micro-planche. Par conséquent, ils occupent une surface du plan de détection non disponible pour l'absorption du rayonnement électromagnétique, d'autant plus importante qu'ils sont longs pour augmenter leur résistance thermique R_{TH}.

Une solution connue pour pallier ce problème est par exemple décrite dans le document US6307194 B1. Dans ce document, l'absorbeur est déporté au-dessus de la micro-planche par un pilier conducteur de la chaleur reliant l'absorbeur à une couche transductrice disposée sur la micro-planche. L'absorbeur s'étend alors au-delà de la micro-planche, dans une région surplombant les bras d'isolation thermique.

Une autre solution connue pour augmenter l'absorption de rayonnement électromagnétique consiste à adapter l'impédance de l'absorbeur, par exemple pour être sensiblement égale à l'impédance du vide, par ajustement de son épaisseur. Il est généralement nécessaire d'adjoindre un réflecteur formant avec l'absorbeur une cavité optique quart d'onde pour une longueur d'onde du rayonnement électromagnétique. Il existe cependant une différence de chemins optiques entre différentes parties de la cavité optique, notamment entre une région située au niveau des bras d'isolation thermique et une région située au niveau de la micro-planche, de sorte que l'absorption n'est pas optimale sur toute la surface de l'absorbeur.

Enfin, il est nécessaire de veiller à ce que le bruit de détection ne soit pas trop élevé. Parmi les différentes sources de bruit, le bruit de phonon est inversement proportionnel à la racine carrée de la capacité thermique C_{TH} de la micro-planche. Il est donc souvent nécessaire de l'ajuster. Il est cependant difficile d'optimiser cette capacité thermique C_{TH} en modifiant les épaisseurs ou la nature des couches de la micro-planche communes avec les bras d'isolation thermique sans impacter négativement des propriétés physiques ou électriques nécessaires de ces derniers. Certains autres éléments de la micro-planche ne peuvent pas non plus être changés à cette fin sans impacter le bon fonctionnement du détecteur thermique ou accroître le coût de fabrication, comme par exemple la ou les couches constitutives d'une thermistance.

Il existe donc un besoin d'ajuster la capacité thermique de la micro-planche sans modifier la nature des matériaux ou les épaisseurs des couches communes avec les bras d'isolation thermique. Il existe également un besoin pour une cavité optique quart d'onde optimale sur sensiblement toute la surface d'un absorbeur déporté, s'étendant au-dessus des bras d'isolation thermique.

### EXPOSÉ DE L'INVENTION

L'invention a pour objectif de remédier au moins en partie aux inconvénients de l'art antérieur, et plus particulièrement de proposer un détecteur thermique, facile et peu coûteux à fabriquer, présentant une forte sensibilité et un bruit réduit.

Pour cela, l'objet de l'invention est un détecteur thermique pour détecter un rayonnement électromagnétique, comportant : un substrat de lecture ; des bras d'isolation thermique ; une micro-planche suspendue au-dessus du substrat de lecture par les bras d'isolation thermique, comprenant un transducteur thermique, les bras d'isolation thermique. La micro-planche s'étendant dans un plan de détection du détecteur thermique. Le détecteur thermique comporte en outre un absorbeur couplé thermiquement au transducteur thermique, coopérant avec la micro-planche pour former une chambre close du détecteur thermique, intégralement remplie d'un matériau de remplissage électriquement isolant.

Le détecteur thermique est tel que l'absorbeur comporte une région périphérique, et une région centrale s'étendant toutes deux parallèlement au plan de détection, la région centrale en vis-à-vis de la chambre close et la région périphérique en vis-à-vis des bras d'isolation thermique.

Certains aspects préférés mais non limitatifs de ce détecteur thermique sont les suivants.

Le détecteur thermique peut comporter en outre un réflecteur pouvant s'étendre parallèlement au plan de détection sur ou dans le substrat de lecture, en vis-à-vis de l'absorbeur et pouvant former avec la région périphérique ou la région centrale, une cavité optique quart d'onde pour une longueur d'onde du rayonnement électromagnétique.

La région centrale peut s'étendre dans un plan distinct de celui de la région périphérique de sorte à compenser une différence de chemins optiques entre ces deux régions et le réflecteur.

Le détecteur thermique peut comporter une portion isolante en un matériau électriquement isolant, pouvant revêtir la région périphérique. La chambre close peut être délimitée par une partie centrale de la portion isolante.

Le matériau de remplissage peut ne pas comporter pas de pic d'absorption pour une longueur d'onde du rayonnement électromagnétique.

Les bras d'isolation thermique et la micro-planche peuvent comporter au moins une couche structurée commune.

L'invention porte également sur capteur d'image thermique comportant une pluralité de détecteurs thermiques selon l'une quelconque des caractéristiques précédentes. Les détecteurs thermiques peuvent être agencés en matrice de pas inférieur ou égal à 8,5 µm.

L'invention porte également sur un procédé de fabrication d'un détecteur thermique selon l'une quelconque des caractéristiques précédentes, comportant une étape de fourniture d'une structure initiale comportant un substrat de lecture, une couche sacrificielle inférieure reposant sur le substrat de lecture, une micro-planche et des bras d'isolation thermique, la micro-planche et les bras d'isolation thermique s'étendant sur une face supérieure de la couche sacrificielle inférieure opposée au substrat de lecture.

Le procédé de fabrication comporte une étape de dépôt d'une couche sacrificielle supérieure sur la couche sacrificielle inférieure, la micro-planche et les bras d'isolation thermique ; une étape de formation d'un plot central du matériau de remplissage reposant sur la micro-planche, l'étape de formation comportant une sous-étape de gravure d'un évidement dans la couche sacrificielle supérieure à l'intérieur duquel le plot central est agencé de façon à être à distance de flancs latéraux de celui-ci.

Le procédé de fabrication comporte en outre une étape de dépôt d'un feuillet absorbant comportant une couche métallique sur la couche sacrificielle supérieure et le plot central, de sorte à emprisonner le plot central dans un volume fermé destiné à être l'intérieur de la chambre close ; une étape de structuration du feuillet absorbant pour former l'absorbeur ; et une étape de retrait des couches sacrificielles inférieure et supérieure au cours de laquelle le plot central est protégé par la chambre close.

La sous-étape de gravure de l'évidement peut conduire à la formation d'une tranchée bouclant sur elle-même, pouvant traverser de part en part la couche sacrificielle supérieure, de sorte à définir des flancs du plot central.

Le plot central peut être aminci préalablement à l'étape de dépôt du feuillet absorbant.

L'étape de formation du plot central peut comporter une sous-étape de dépôt d'une couche d'apport en un matériau diélectrique ou semiconducteur non intentionnellement dopé, différent d'un matériau constitutif de la couche sacrificielle supérieure, éventuellement suivie d'une sous-étape de structuration du plot central dans la couche d'apport.

La couche d'apport peut être en silicium amorphe ou polycristallin. L'étape de formation du plot central peut comporter une sous-étape de dépôt conforme d'une couche isolante conforme en un matériau isolant électrique, sur la couche sacrificielle supérieure et dans l'évidement, préalablement à la sous-étape de dépôt de la couche d'apport.

Le plot central peut occuper au moins 80 % de la surface de la micro-planche.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1A est une vue schématique en coupe d'un exemple de dispositif thermique selon l'invention ;
la figure 1B est une vue schématique en coupe d'un exemple du dispositif thermique selon l'invention selon un mode de réalisation avantageux ;
la figure 1C est une vue de dessus illustrant un agencement possible d'éléments principaux du dispositif de détection selon l'invention dans un agencement en matrice ;
les figures 2A à 2F sont des vues en coupe représentant des étapes d'un premier procédé de fabrication du dispositif thermique de la figure 1A ;
les figures 3A à 3D sont des vues en coupe représentant des étapes d'un deuxième procédé de fabrication du dispositif thermique de la figure 1B ;
les figures 4A à 4E sont des vues en coupe représentant des étapes d'un troisième procédé de fabrication du dispositif thermique de la figure 1B ;
la figure 5 est un graphique donnant des résultats de simulation de l'absorption d'un absorbeur intégré à une micro-planche d'un détecteur thermique selon l'art antérieur, en fonction de la longueur d'onde et d'une taille de pixel.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur détecteur thermique pour détecter un rayonnement électromagnétique, par exemple infrarouge ou térahertz. Le rayonnement électromagnétique à détecter est de préférence compris dans la gamme de longueurs d'onde comprise entre 3 µm et 20 µm. Il peut s'agir de la gamme des infrarouges lointains (ou LWIR, selon un acronyme anglais) comprise entre 7 µm et 14 µm.

Le détecteur thermique comporte une micro-planche et un absorbeur déporté, c'est-à-dire qu'il s'étend principalement dans un plan distinct de celui dans lequel s'étend la micro-planche. Par opposition, on appelle absorbeur intégré, un absorbeur qui s'étend intégralement sur et/ou dans la micro-planche.

La micro-planche est suspendue par des bras d'isolation thermique et s'étend, tout comme les bras d'isolation thermique dans un plan de détection du détecteur thermique. Le détecteur thermique est ainsi facile à fabriquer. L'absorbeur comporte une région périphérique s'étendant au-dessus des bras d'isolation thermique pour augmenter la sensibilité du détecteur thermique.

L'absorbeur coopère avec la micro-planche pour former une chambre close intégralement remplie d'un matériau de remplissage électriquement isolant. L'absorbeur et la micro-planche sont en contact direct ou par l'intermédiaire d'une ou plusieurs couches électriquement isolantes, dans une région périphérique entourant de toute part la chambre close, définissant ainsi un volume fermé. Des dimensions géométriques de l'absorbeur permettent ainsi de facilement ajuster la masse de matériau de remplissage contenu dans la chambre close et ainsi ajuster la capacité thermique du détecteur thermique indépendamment d'autres facteurs comme la surface occupée par les bras d'isolation thermique ou des épaisseurs de couches constitutives de la micro-planche. De plus, le matériau de remplissage étant enfermé dans la chambre close, il n'est pas susceptible d'être endommagé, par exemple lors d'étapes de procédé comme une gravure de couches sacrificielles pour suspendre la micro-planche.

Par couche, on entend ici et pour la suite de la description, une étendue constituée d'une ou plusieurs sous-couches d'un matériau dont l'épaisseur suivant un axe z est inférieure, par exemple dix fois, voire vingt fois, à ses dimensions longitudinales de largeur et de longueur dans un plan (x, y) perpendiculaire à l'axe z. Une couche peut être structurée, ou une structure d'épaisseur sensiblement constante s'étendant majoritairement selon un plan principal. Lorsqu'elle consiste en plusieurs sous-couches, les sous-couches peuvent être en des matériaux différents. La ou les sous-couches s'étendent dans des plans sensiblement parallèles au plan (x, y). Lorsqu'une couche possède une propriété, il est entendu que lorsqu'elle consiste en plusieurs sous-couches, toutes les sous-couches possèdent la même propriété, sauf mention explicite du contraire. A titre d'exemple, à défaut de plus de précision, une couche en métal ou en un matériau semiconducteur ou amorphe peut comporter plusieurs sous-couches, toutes respectivement en métal, en un matériau semiconducteur, ou amorphes. Une couche peut être conforme, ce qui implique qu'elle s'étend sur une surface, par exemple non-plane, et qu'elle épouse cette surface. Une couche conforme a une épaisseur, mesurée perpendiculairement à la surface qu'elle épouse, sensiblement constante, par exemple à 10 % près, voire à 5 % près.

Dans la description, deux éléments sont "couplés thermiquement" lorsqu'un chemin de conduction thermique lie les deux éléments de sorte que la chaleur puisse être transférée efficacement de l'un à l'autre. Les deux éléments peuvent être en contact physique l'un avec l'autre. Ils peuvent alternativement ou en complément, être séparés l'un de l'autre par un milieu de faible résistance thermique, par exemple inférieure ou égale à 1E3 K/W. Par équivalence ou en complément, la chaleur peut être transférée de l'un à l'autre par convection et/ou rayonnement.

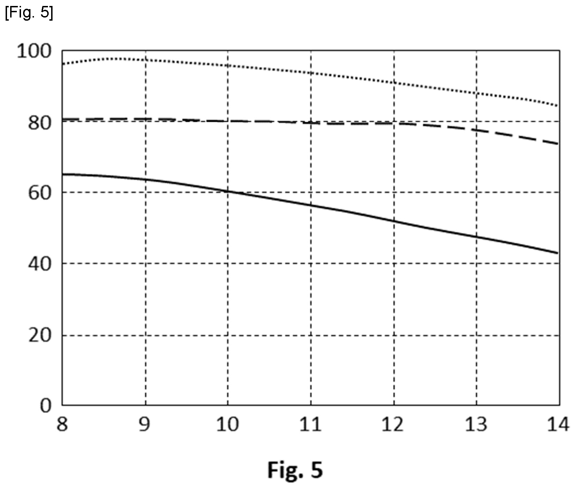

Par un raisonnement à contrario, la figure 5 permet de mettre en évidence l'intérêt d'utiliser un absorbeur déporté et d'ajuster la capacité thermique C_{TH} de la micro-planche 80 d'un détecteur thermique.

Sur cette figure, on donne des résultats de simulation d'absorption (axe des ordonnées en %) obtenus avec un absorbeur intégré pour différentes tailles de l'empreinte géométrique du détecteur thermique, en fonction de la longueur d'onde du rayonnement électromagnétique en µm (axe des abscisses). L'absorbeur occupe toute la surface de la micro-planche. Toutes les empreintes géométriques sont carrées. Les bras d'isolation thermique sont coplanaires avec la micro-planche. Les courbes en pointillés courts, pointillés longs et trait plein correspondent respectivement à des empreintes géométriques de 12 µm, 8,5 µm et 6 µm de côté.

Pour chaque courbe, on a ajusté la longueur des bras pour garder une responsivité du détecteur thermique constante (ajustement de la résistance thermique R_{TH} des bras d'isolation thermique). Les bras sont ainsi d'autant plus longs que l'empreinte géométrique du détecteur thermique est faible. Cet ajustement conduit à des ratios de surfaces entre l'absorbeur et l'empreinte géométrique respectivement égaux à 80 %, 70 % et 30 % pour les empreintes de 12 µm, 8,5 µm et 6 µm de côté. La surface de la micro-planche, et par conséquent sa capacité thermique C_{TH}, est imposée par la longueur des bras. Il est constaté que l'absorption décroit rapidement lorsque l'empreinte diminue, d'autant plus que la longueur d'onde est grande.

Des modes de réalisation particuliers vont être décrits se rapportant à un détecteur thermique comportant une thermorésistance. Cependant, le détecteur thermique peut alternativement comporter un autre type de transducteur thermique sans sortir du cadre de l'invention, comme par exemple un transducteur thermique mettant en œuvre un transistor MOS de mesure, ou une diode.

Les modes de réalisations décrits ci-après sont destinés à la détection d'un rayonnement électromagnétique infrarouge, par exemple dans l'infrarouge lointain. Ils peuvent être adaptés à un détecteur thermique sensible dans la gamme térahertz. Le cas échéant, l'absorbeur peut comporter une antenne connectée ou couplée électriquement à une charge résistive adaptée en impédance, la charge résistive étant couplée thermiquement avec le transducteur thermique. L'antenne peut s'étendre en vis-à-vis de bras d'isolation thermique. D'autres adaptations peuvent être nécessaires, comme par exemple l'apport d'un ou plusieurs matériaux transparents pour ajuster la hauteur d'une cavité optique quart d'onde entre l'absorbeur et le substrat de lecture.

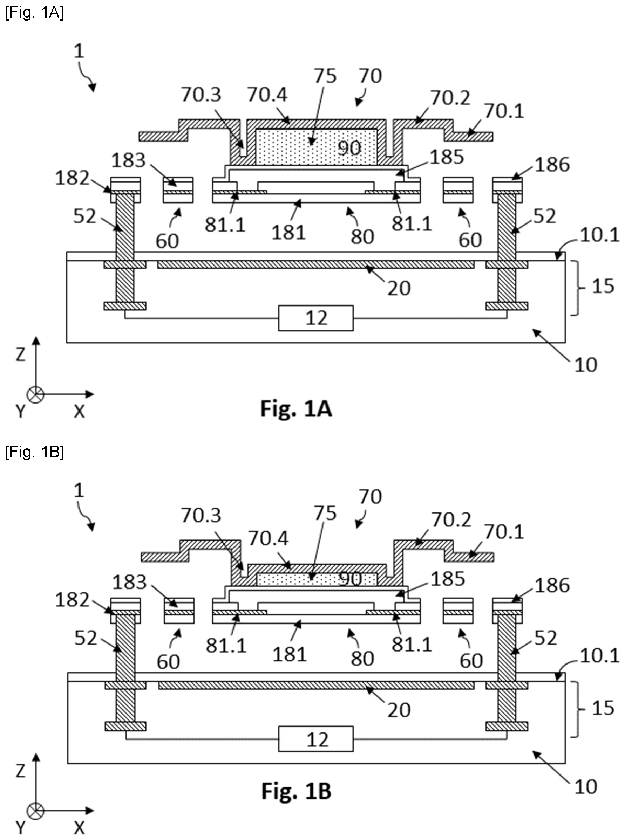

Un exemple de détecteur thermique 1 selon l'invention va tout d'abord être décrit en lien avec la figure 1A. Le détecteur thermique 1 comporte un substrat de lecture 10, un réflecteur 20, des bras d'isolation thermique 60, une micro-planche 80 et un absorbeur 70. La micro-planche 80 est suspendue au-dessus du substrat de lecture 10 par les bras d'isolation thermique 60. Le substrat de lecture 10 comporte une face supérieure 10.1 du substrat de lecture 10 située du côté de la micro-planche 80.

On définit ici et pour la suite de la description un repère direct tridimensionnel orthogonal (X, Y, Z) attaché au substrat de lecture 10, où les axes X et Y forment un plan parallèle à la face supérieure 10.1 du substrat de lecture 10, l'axe X étant orienté dans les plan de coupe des figures de la description dont celui de la figure 1A, et où l'axe Z est orienté de manière sensiblement orthogonale à la face supérieure 10.1, depuis la face supérieure 10.1 vers la micro-planche 80. Dans la suite de la description, les termes « vertical » et « verticalement » s'entendent comme étant relatifs à une orientation sensiblement parallèle à l'axe Z, et les termes « horizontal » et « horizontalement » comme étant relatifs à une orientation sensiblement parallèle au plan (X, Y). Par ailleurs, les termes « inférieur » et « supérieur » s'entendent comme étant relatifs à un positionnement croissant lorsqu'on s'éloigne du substrat de lecture 10 suivant la direction +Z. Le terme « latéral » se réfère à une orientation sensiblement parallèle à l'axe Z. Enfin, une « vue de dessus » est une vue selon la direction -Z.

Le substrat de lecture 10 peut par exemple être fourni par une fonderie spécialisée dans la fabrication de puces semiconductrices. Le détecteur thermique 1 comporte un circuit de lecture 12 réalisé dans et/ou sur le substrat de lecture 10. Le circuit de lecture 12 peut comporter, comme ici, un empilement d'interconnexions 15. Sur la figure 1A, on a représenté deux niveaux d'interconnexions métallique, mais l'empilement d'interconnexions 15 peut en comporter un nombre quelconque.

En figure 1A, on a représenté un seul détecteur thermique 1. Il peut appartenir à un pixel d'un capteur d'image thermique comportant une pluralité de détecteurs thermiques 1, agencés en matrice. Le cas échéant, le circuit de lecture 12 peut être un bloc d'un circuit de lecture commun à tous les détecteurs thermiques 1. Les circuits de lecture 12 de deux ou plusieurs détecteurs thermiques 1 peuvent partager des composants électroniques ou des connexions électriques.

Le réflecteur 20 est apte à réfléchir le rayonnement électromagnétique à détecter. Il est par exemple en alliage d'aluminium-cuivre (AlCu). Il s'étend parallèlement à la face supérieure 10.1 du substrat de lecture 10. Dans cet exemple, il affleure celle-ci, sans que cela soit indispensable.

Les bras d'isolation thermique 60 sont ici au nombre de deux. Ils s'étendent dans un plan de détection, parallèle à la face supérieure 10.1. Ils peuvent être de toutes formes connues et constitués de tous empilements de couches structurées connues. Ils partagent de préférence au moins une couche commune avec la micro-planche 80 de sorte à simplifier son procédé de réalisation et à réduire le coût de fabrication. La micro-planche 80 s'étend également dans le plan de détection.

A titre d'exemple, chaque bras d'isolation thermique 60 est formé de portions respectives de plusieurs couches structurées, à savoir : une couche support 181, une couche conductrice 182, une encapsulation structurée 183 et une encapsulation supérieure 186. Ces portions présentent sensiblement la même forme et sont alignées, en vue de dessus. Elles s'étendent horizontalement. La portion de la couche conductrice 182 participant à la définition d'un bras d'isolation thermique 60 est intercalée et en contact avec les portions correspondantes de la couche support 181 et de l'encapsulation structurée 183. Cette dernière est elle-même en contact avec la portion correspondante de l'encapsulation supérieure 186.

Les portions complémentaires de ces couches, c'est-à-dire celles qui ne contribuent pas directement à la définition d'un bras d'isolation thermique 60, appartiennent à la micro-planche 80. Ainsi, dans cet exemple, les couches support 181, conductrice 182, d'encapsulation structurée 183 et d'encapsulation supérieure 186 sont communes aux bras d'isolation thermique 60 et à la micro-planche 80. Chacune de ces portions complémentaires comprend ici au moins un flanc latéral permettant de définir la forme géométrique de la micro-planche 80, en vue de dessus. Dans un capteur d'image thermique comportant plusieurs détecteurs thermiques 1, chacun correspondant à un pixel ou un sous-pixel de l'image thermique, ces couches peuvent également être communes à l'ensemble des détecteurs thermiques 1. Le cas échéant, une portion complémentaire d'une couche par rapport aux portions respectives définissant les bras d'isolation thermique 60, doit s'entendre comme une portion de la couche située à l'intérieur du pixel ou du sous-pixel et ne contribuant pas directement à la définition d'un bras d'isolation thermique 60.

La couche conductrice 182 est conductrice de l'électricité. Elle peut être en métal, comme par exemple en nitrure de titane. La couche support 181, l'encapsulation structurée 183 et l'encapsulation supérieure 186 sont en des matériaux isolants électriques, par exemples en des matériaux diélectriques ou semiconducteurs non intentionnellement dopés. Elles sont par exemple en un matériau résistant à une gravure sacrificielle permettant de suspendre la micro-planche 80. La couche support 181, l'encapsulation structurée 183 et l'encapsulation supérieure 186 sont ici en silicium amorphe non intentionnellement dopé.

Les couches support 181, conductrice 182, d'encapsulation structurée 183 et l'encapsulation supérieure 186 ont des épaisseurs sensiblement constantes. L'encapsulation supérieure 186 est une couche conforme qui a été structurée.

Chaque bras d'isolation thermique 60 a une extrémité proximale en contact avec un pilier d'ancrage 52 respectif du détecteur thermique 1 et une extrémité distale attachée à la micro-planche 80. Chaque pilier d'ancrage 52 est en contact avec un plot de connexion de l'empilement d'interconnexions 15, affleurant la face supérieure 10.1. Dans cet exemple, la couche conductrice 182 assure un contact électrique entre un bras d'isolation thermique 60 et un pilier d'ancrage 52 correspondant, au niveau de l'extrémité proximale du bras d'isolation thermique 60. La couche conductrice 182 se prolonge depuis chaque bras d'isolation thermique 60, dans la micro-planche 80 pour former une électrode 81.1 du détecteur thermique 1. Ainsi, la micro-planche 80 comporte deux électrodes 81.1, chacune connectées électriquement au circuit de lecture 12 par un bras d'isolation thermique 60 et un pilier d'ancrage 52 correspondant. Les électrodes 81.1 sont isolées électriquement l'une de l'autre. Elles ont une largeur généralement plus grande que celles des bras, par exemple 5 fois supérieure.

Les bras d'isolation thermique 60 ont ici des formes identiques. Ils sont de section sensiblement constante sur leur longueur, entre un pilier d'ancrage 52 et la micro-planche 80. Ils sont repliés sur eux-mêmes dans le plan de détection, c'est-à-dire qu'ils serpentent dans celui-ci, entre un pilier d'ancrage 52 et la micro-planche 80. Chaque bras est ainsi par exemple composé de branches et de segments plus courts, disposés orthogonalement à celles-ci et assurant leur liaison. Les sections transversales de deux branches parallèles de chaque bras d'isolation thermique 60 sont visibles sur la figure 1A.

Les piliers d'ancrage 52 sont représentés dans le plan de coupe de la figure 1A, mais ils peuvent, chacun, être situés en arrière ou avant-plan de cette coupe. Dans le cas d'un capteur d'image thermique, deux détecteurs thermiques 1 peuvent avoir en commun un pilier d'ancrage 52.

La micro-planche 80 comporte une couche thermorésistive 185 en un matériau de résistivité variable en fonction de sa température. Dans cet exemple, la couche thermorésistive 185 est à base d'oxyde de vanadium. La couche thermorésistive 185 s'étend parallèlement au plan (X, Y). Elle est en contact des électrodes 81.1 au travers d'ouvertures traversantes pratiquées dans l'encapsulation structurée 183. Ainsi, un courant électrique peut circuler d'un bras d'isolation thermique 60 à l'autre via la couche thermorésistive 185. Cette dernière est emprisonnée dans un volume fermé délimité par l'encapsulation supérieure 186, l'encapsulation structurée 183 et les électrodes 81.1.

La micro-planche 80 a par exemple une section horizontale de forme polygonale, par exemple carrée ou rectangulaire, définie ici par des flancs latéraux respectifs des couches support 181 et conductrice 182, de l'encapsulation structurée 183 et de l'encapsulation supérieure 186.

L'absorbeur 70 est couplé thermiquement à un transducteur thermique de la micro-planche 80. Le transducteur thermique désigne tout composant intégré à la micro-planche 80 apte à convertir une variation de température en une grandeur électrique mesurable. Le transducteur peut comporter un transistor ou une diode, ou comme ici une couche thermorésistive.

L'absorbeur 70 coopère avec la micro-planche 80 pour former une chambre close 90 du détecteur thermique 1. Il consiste en quatre régions contiguës, à savoir : une région périphérique 70.1, une région intermédiaire 70.2, une région d'appui 70.3 et une région centrale 70.4. Chaque région entoure la suivante dans l'ordre de cette énumération, en vue de dessus. La région d'appui 70.3 repose sur une zone d'appui de l'encapsulation supérieure 186, située intégralement en vis-à-vis de la couche thermorésistive 185. En tout point, la zone d'appui est en contact à la fois avec la couche thermorésistive 185 et la région d'appui 70.3.

La région d'appui 70.3 définit latéralement la chambre close 90. Elle l'entoure de toute part en vue de dessus. Dans un plan horizontal, elle suit un contour fermé. Cette forme permet d'augmenter la surface d'accroche de l'absorbeur 70 sur la micro-planche 80 et d'améliorer la conduction thermique entre celui-ci et le transducteur thermique, par comparaison aux absorbeurs déportés de l'art antérieur soutenus par un pilier central. Le contour peut par exemple avoir une forme carrée ou rectangulaire en vue de dessus, avec d'éventuels arrondis de coins.

La région centrale 70.4 s'étend de manière continue d'un bord quelconque de la région d'appui 70.3 jusqu'à un bord opposé de la région d'appui 70.3. Elle recouvre la chambre close 90 sur un côté de celle-ci, opposé à la micro-planche 80. Sur sa paroi opposée à la région centrale 70.4, la chambre close 90 est délimitée par l'encapsulation supérieure 186. Ainsi, l'absorbeur 70 définit avec la micro-planche 80 un volume fermé, siège de la chambre close 90.

L'absorbeur 70 comporte au moins une couche d'absorption conductrice de l'électricité, par exemple en métal, s'étendant, pour chaque partie horizontale de l'absorbeur 70, sur sensiblement l'intégralité de sa surface projetée dans le plan (X, Y). Elle a de préférence une épaisseur permettant d'adapter son impédance à celle du vide. La couche d'absorption est ici en nitrure de titane. Avantageusement, celle-ci est entièrement revêtue d'une couche isolante électrique d'un côté et/ou de l'autre de celle-ci. Dans cet exemple, elle est intercalée entre une couche isolante inférieure et une couche isolante supérieure, de façon à être intégralement en contact direct avec celles-ci. Ces deux couches sont constituées de matériaux respectifs résistant à une gravure de couches sacrificielles permettant de suspendre la micro-planche 80. Elles peuvent par exemple être, l'une ou l'autre, en silicium amorphe non intentionnellement dopé, en nitrure d'aluminium (AIN) ou en alumine (Al₂O₃). La couche d'absorption est de préférence d'un seul tenant, sans que cela soit absolument nécessaire.

L'épaisseur cumulée de l'encapsulation supérieure 186 et de la couche isolante inférieure en regard de la région d'appui 70.3 est suffisamment faible pour assurer une bonne conduction thermique entre la couche d'absorption et la couche thermorésistive 185, et suffisamment grande pour isoler électriquement la couche d'absorption de la couche thermorésistive 185. A cette fin la couche isolante inférieure est de préférence en alumine. Celle-ci peut avoir une épaisseur comprise entre 5 nm et 50 nm. L'encapsulation supérieure 186 peut avoir une épaisseur comprise entre 10 nm et 100 nm.

Les régions périphérique 70.1, intermédiaire 70.2 et centrale 70.4 s'étendent dans des plans parallèles au plan (X, Y) et au réflecteur 20. Les régions intermédiaire 70.2 et centrale 70.4 sont sensiblement coplanaires. La région périphérique 70.1 peut s'étendre dans le même plan que celui contenant la région centrale 70.4, ou comme représenté ici, dans un plan horizontal intermédiaire situé entre le plan contenant la région centrale 70.4 et le plan de détection.

La région d'appui 70.3 a la forme d'un repli de l'absorbeur 70 dont la section latérale est en forme de U, la base du U étant en contact avec l'encapsulation supérieure 186. La couche d'absorption peut comporter une ou plusieurs discontinuités à l'intérieur de la région d'appui 70.3. La région périphérique 70.1 surplombe les bras d'isolation thermique 60. La région centrale 70.4 surplombe la micro-planche 80.

Le réflecteur 20 s'étend en vis-à-vis des régions périphérique 70.1, intermédiaire 70.2 et centrale 70.4. Il forme ainsi des cavités optiques avec chacune de ces régions, appelées respectivement cavité périphérique, cavité intermédiaire et cavité centrale. La cavité centrale, définie entre la région centrale 70.4 et le réflecteur 20, inclut le matériau de remplissage 75, et a par conséquent une longueur optique (ou chemin optique) plus importante que celle de la cavité périphérique, et éventuellement plus importante que celle de la cavité intermédiaire. De préférence, le réflecteur 20 forme avec au moins une de ces trois régions une cavité optique quart d'onde pour une longueur d'onde du rayonnement électromagnétique, par exemple pour une longueur d'onde centrale de ce rayonnement électromagnétique, de sorte à maximiser l'absorption dans la région de l'absorbeur 70 correspondante.

Il est donné à « chemin optique » ou « longueur optique » leur sens usuel dans le domaine technique. Ainsi, dans un milieu homogène, le chemin optique entre deux points A et B est défini comme la distance AB parcourue par un rayon lumineux multipliée par l'indice de réfraction que le rayon a rencontré lors de son trajet. Dans le cas d'un rayonnement électromagnétique traversant une succession de couches homogènes de natures et d'épaisseurs différentes, le chemin optique entre deux points est donné par la somme des produits des indices de réfraction de ces couches par leurs épaisseurs respectives. La différence entre les notions de « chemin optique » et de « longueur optique » est une question de terminologie : la première est plus générale et fait intervenir un calcul intégral le long du parcours de la lumière, tandis que la seconde est préférentiellement employée pour une propagation dans un milieu homogène ou une succession de milieux homogènes.

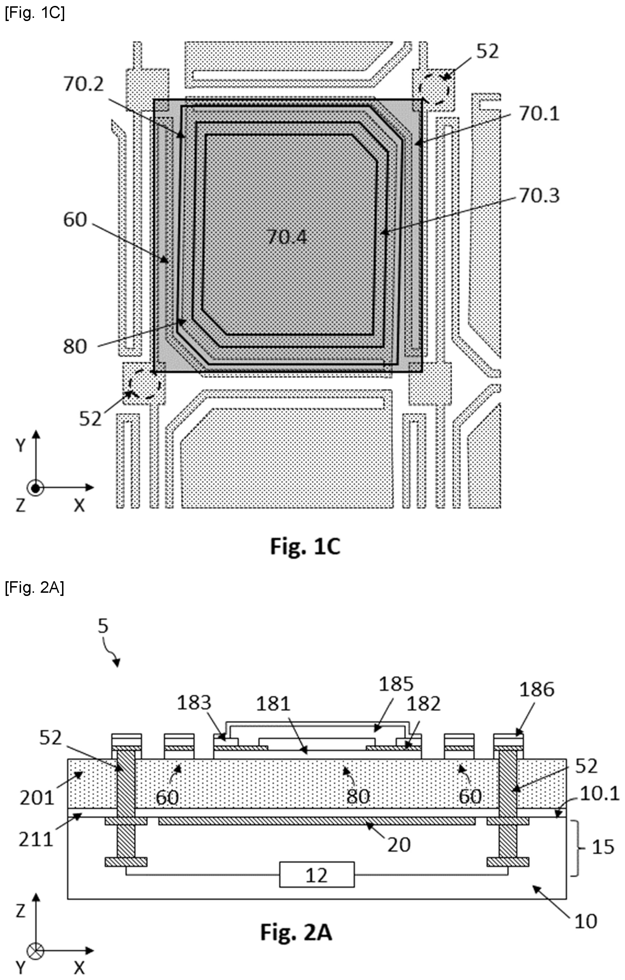

Lorsque le détecteur thermique 1 est obtenu avec les étapes de procédé des figures 2A à 2F, les distances verticales séparant les régions périphérique 70.1, intermédiaire 70.2 et centrale 70.4 du plan de détection ne peuvent pas être ajustées les unes indépendamment des autres. Il est cependant possible d'adapter des paramètres du procédé de fabrication de sorte à modifier la hauteur des piliers d'ancrage 52, tout en maintenant l'absorbeur 70 à sa position, pour compenser au moins partiellement une différence de longueur optique entre la cavité centrale et la cavité périphérique. La capacité thermique C_{TH} est ajustée en modifiant une ou plusieurs dimensions horizontales de la région centrale 70.4, celles-ci impactant directement la masse de matériau de remplissage 75 emprisonné dans la chambre close 90. Un compromis optimal peut ainsi être trouvé entre la capacité thermique C_{TH} et l'absorption de l'absorbeur 70, grâce à l'ajustement de la hauteur des piliers d'ancrage 52 et/ou de la géométrie de l'absorbeur 70. D'autres scénarii sont envisageables, incluant par exemple un changement de hauteur de l'absorbeur 70 par rapport au réflecteur 20.

L'empreinte géométrique du détecteur thermique 1 correspond à la surface occupée dans le plan de détection, par les bras d'isolation thermique 60, ainsi que par leurs espaces interbranches lorsque ceux-ci serpentent, et par la micro-planche 80. Dans un capteur d'image thermique comportant une pluralité de détecteurs thermiques 1 agencés en matrice, l'empreinte géométrique d'un détecteur thermique 1 est généralement sensiblement égale à l'espace qui lui est alloué dans la matrice. A empreinte géométrique fixée, la présence de la région périphérique 70.1 permet d'augmenter la surface d'absorption de l'absorbeur 70, sans réduire la résistance thermique R_{TH} des bras d'isolation thermique 60, laquelle augmente avec leur longueur à section constante. Cette augmentation de la surface de détection sans augmentation des pertes thermiques vers le substrat de lecture 10 a pour effet synergique d'accroître la responsivité du détecteur thermique 1.

Pour atteindre une résistance thermique R_{TH} suffisante, les bras d'isolation thermique 60 ont ici une faible largeur horizontale. Celle-ci est notamment inférieure à la longueur d'onde minimale du rayonnement électromagnétique à détecter, notamment lorsqu'il s'agit d'un rayonnement électromagnétique dans l'infrarouge lointain. Les bras d'isolation thermique 60 sont par conséquent perçus comme un milieu effectif d'indice de réfraction intermédiaire entre celui du vide les entourant et ceux des couches constitutives de ceux-ci. Ainsi, ils induisent une perturbation optique minimale dans la cavité optique formée entre le réflecteur 20 et la région périphérique 70.1, d'autant plus faible que les espaces interbranches sont strictement supérieurs à la largeur des bras d'isolation thermique 60. L'absorption du rayonnement électromagnétique y est donc supérieure à celle de la région centrale 70.4, d'autant plus que les électrodes 81.1 sont de dimension supérieure à cette longueur d'onde minimale, et s'étendent à l'intérieur de la cavité centrale.

Cette configuration est d'autant plus avantageuse que l'empreinte du détecteur thermique 1 est faible. A titre d'exemple, un absorbeur 70 selon l'invention appliqué aux détecteurs thermiques de la figure 5, la région périphérique 70.1 occuperait respectivement 20 %, 30 % et 70 % de la surface totale de l'absorbeur 70 ou de l'empreinte géométrique du détecteur thermique 1, pour des empreintes carrées de 12 µm, 8,5 µm et 6 µm de côté.

En figure 1B, on a représenté une version avantageuse du détecteur thermique 1 de la figure 1A, facilitant l'optimisation de la capacité thermique C_{TH} concomitamment avec celle des longueurs optiques des cavités centrale et périphérique. Seules les différences avec celui-ci seront explicitement décrites.

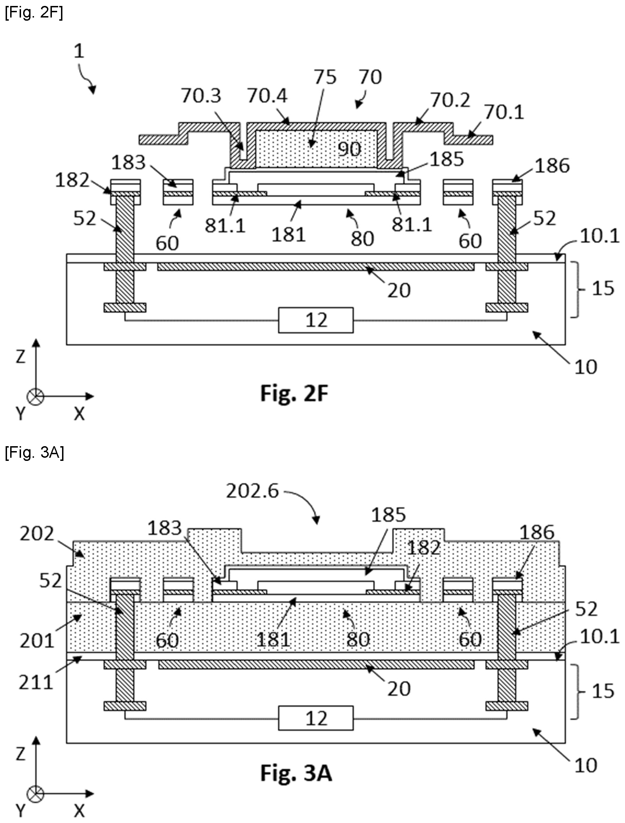

Le détecteur thermique 1 peut par exemple être obtenu par le procédé de fabrication illustré aux figures 3A à 3D. Ici, la région centrale 70.4 s'étend dans un plan horizontal plus proche du réflecteur 20 et de la face supérieure 10.1 que celui dans lequel s'étend la région périphérique 70.1, de manière à compenser une différence de longueurs optiques de la cavité périphérique et de la région centrale 70.4. En effet, la lumière traverse des milieux d'indice de réfraction plus élevés au droit de la région centrale 70.4 qu'au droit de la région périphérique 70.1, étant donné que les bras d'isolation thermique 60 sont équivalents à une couche d'indice effectif moyen entre celui du vide et celui des matériaux constitutifs des bras comme expliqué supra, et que la cavité centrale inclut le matériau de remplissage 75 ainsi que la couche thermorésistive 185.

De préférence, les cavités centrale et périphérique sont des cavités optiques quart d'onde pour des longueurs d'onde du rayonnement électromagnétique sensiblement égales, par exemple égales à la longueur d'onde centrale ou moyenne du rayonnement électromagnétique à détecter, à 10 % près. La surface de la micro-planche 80 délimitée par la région d'appui 70.3, permet d'ajuster le volume de la chambre close 90 afin d'atteindre une valeur souhaitée de la capacité thermique C_{TH} du détecteur thermique 1.

Il est préférable de disposer l'essentiel de la région d'appui 70.3 en vis-à-vis des électrodes 81.1 dans la mesure où celles-ci sont absorbantes au rayonnement électromagnétique, et où la configuration en U de la région d'appui 70.3 ne permet pas une absorption optimale. Il est également préférable de maximiser la surface occupée par la région centrale 70.4 de façon à augmenter l'absorption. Toutefois, il est possible d'ajuster la capacité thermique C_{TH} sur une plage étendue de valeurs, tout en respectant ces deux configurations avantageuses, en ajustant la hauteur des piliers d'ancrage 52.

La chambre close 90 a une hauteur mesurée parallèlement à l'axe Z, depuis l'encapsulation supérieure 186 jusqu'à l'absorbeur 70. Elle une largeur mesurée parallèlement à l'axe X entre deux bords opposés de la région d'appui 70.3. Elle a une longueur mesurée parallèlement à l'axe Y entre deux bords opposés de la région d'appui 70.3. Lorsque le matériau de remplissage 75 est en oxyde de silicium, la hauteur est par exemple comprise entre et 50 nm et 500 nm. La largeur peut être comprise entre 40 % et 90 % de la largeur de la micro-planche 80. La longueur peut être comprise entre 40 % et 90 % de la longueur de la micro-planche 80. La chambre close 90 repose intégralement sur la micro-planche 80. Sa forme géométrique est indépendante de celle de la micro-planche 80. De préférence, la chambre close 90 est moins haute que large ou longue. Elle occupe par exemple au moins 80 % de la surface de la micro-planche 80.

La figure 1C montre une vue schématique de dessus d'un arrangement possible du détecteur thermique 1 des figures 1A ou 1B, dans une matrice incluant d'autres détecteurs thermiques. Seuls les éléments principaux sont représentés. Le détecteur thermique 1 est entouré de vues partielles d'autres détecteurs thermiques de la matrice pouvant comprendre des absorbeurs intégrés ou déportés, y compris un absorbeur 70 selon l'invention. Le cas échéant, ceux-ci ne sont pas représentés pour ne pas surcharger la figure.

La micro-planche 80 a ici une forme hexagonale. Les bras d'isolation thermique 60 serpentent dans le plan de détection. Le détecteur thermique 1 comporte deux piliers d'ancrage 52 Ils sont agencés sous les bras d'isolation thermique 60, et par conséquent représentés en lignes pointillées. Seuls les piliers d'ancrage 52 du détecteur thermique 1 central sur la figure 1C ont été représentés. Chaque pilier d'ancrage 52 est commun à deux détecteurs thermiques 1. Ils sont situés à des coins diagonalement opposés du détecteur thermique 1.

La région d'appui 70.3 épouse sensiblement la forme de la micro-planche 80 en vue de dessus. L'absorbeur 70 occupe sensiblement toute l'empreinte géométrique du détecteur thermique 1 selon cette vue.

A présent, un premier procédé de fabrication d'un détecteur thermique 1 tel qu'illustré sur la figure 1A va être décrit.

En figure 2A, on fournit une structure initiale 5 comportant le substrat de lecture 10, une couche sacrificielle inférieure 201 reposant sur le substrat de lecture 10, une micro-planche 80 et deux bras d'isolation thermique 60. La micro-planche 80 et les bras d'isolation thermique 60 s'étendent sur une face supérieure de la couche sacrificielle inférieure 201 opposée au substrat de lecture 10.

La structure initiale 5 comporte tous les éléments de la figure 1A, à l'exception de la chambre close 90, du matériau de remplissage 75 et de l'absorbeur 70. Elle comporte une couche protectrice 211 s'étendant sur la face supérieure 10.1 du substrat de lecture 10, de sorte à être en contact avec celle-ci. Celle-ci présente des ouvertures traversantes à l'intérieur desquelles les piliers d'ancrage 52 se prolongent pour atteindre un niveau supérieur de l'empilement d'interconnexions 15.

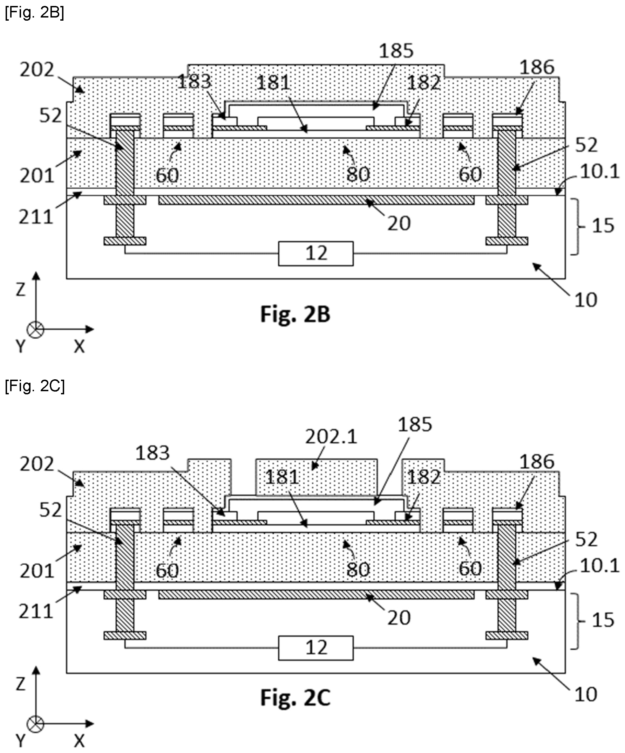

En figure 2B, on dépose une couche sacrificielle supérieure 202 sur la couche sacrificielle inférieure 201, les bras d'isolation thermique 60 et la micro-planche 80. Les couches sacrificielles inférieure et supérieure 201, 202 sont de préférences réalisées dans le même matériau apte à être retiré par une gravure sélective par rapport aux matériaux constitutifs du détecteur thermique 1 en contact avec ces deux couches, et par rapport à la couche protectrice 211. Elles peuvent par exemple être en polyimide, ou comme ici, en oxyde de silicium. La couche protectrice 211 peut être en alumine ou en nitrure d'aluminium.

En figure 2C, on forme un plot central 202.1 reposant intégralement sur la micro-planche 80. Pour cela, on grave un évidement traversant de part en part la couche sacrificielle supérieure 202 en vis-à-vis de la micro-planche 80, avec arrêt sur l'encapsulation supérieure 186. L'évidement est ici une tranchée bouclant sur elle-même dans un plan horizontal, parallèle au plan de détection, au réflecteur 20 et à la face supérieure 10.1 du substrat de lecture 10. En vue de dessus, la tranchée peut être de forme quelconque. Elle peut par exemple être centrée sur une ligne centrale obtenue par une homothétie des flancs de la micro-planche 80. Le centre de l'homothétie peut être le centre de la planche. Elle peut avoir une forme carrée, ou rectangulaire. Elle est hexagonale pour obtenir un détecteur thermique 1 similaire à celui de la figure 1C. De préférence, comme ici, la tranchée a une largeur horizontale sensiblement constante, par exemple comprise entre 100 nm et 1 µm.

L'évidement définit directement des flancs latéraux du plot central 202.1. Le plot central 202.1 consiste en une partie restante de la couche sacrificielle supérieure 202. Il est ainsi formé au cours d'une seule étape de gravure. Le matériau de remplissage 75 est par conséquent de l'oxyde de silicium, dans cet exemple.

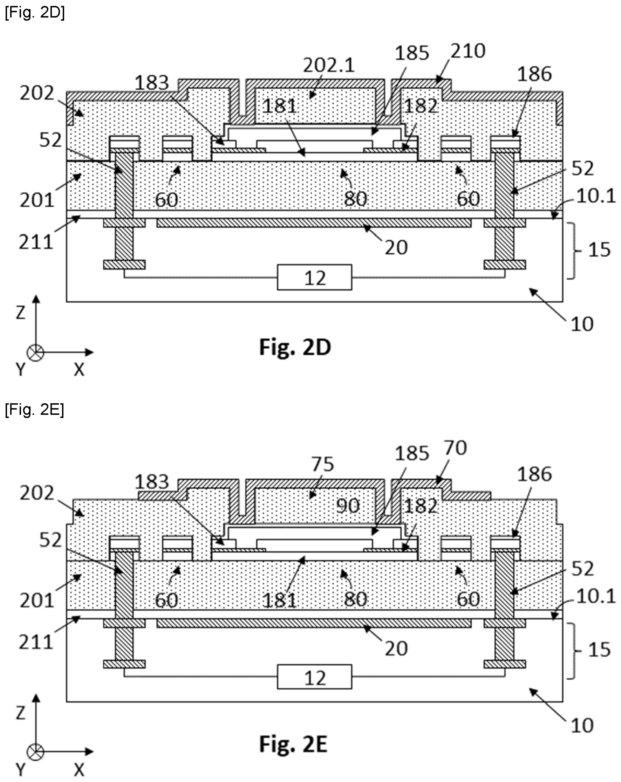

En figure 2D, on procède à un dépôt d'un feuillet absorbant qui comporte une couche métallique 210 éventuellement revêtue de couches isolantes électriques sur une ou l'autre de ses faces, ou les deux. Le feuillet absorbant est déposé sur la couche sacrificielle supérieure 202 et dans l'évidement. Au moins une de ses couches constitutives est déposée de façon conforme, de sorte qu'il épouse l'évidement. Il peut remplir complètement l'évidement, ou comme représenté ici, laisser subsister un espace libre au centre de la tranchée, dépendant de l'épaisseur du feuillet absorbant par rapport à la largeur de la tranchée. Le feuillet repose sur la micro-planche 80 au niveau du fond de l'évidement.

De préférence, comme ici, on dépose dans l'ordre, une couche isolante inférieure, la couche métallique 210 et une couche isolante supérieure. Dans cet exemple, les couches isolantes inférieure et supérieure sont déposées de façon conforme. Celles-ci ne sont pas représentées. Les couches isolantes inférieure et supérieure sont en tous matériaux isolants électriques. Dans cet exemple, elles sont, l'une indépendamment de l'autre, en nitrure d'aluminium, en alumine, en silicium amorphe ou en toute combinaison de ces matériaux.

La couche métallique 210 est en métal, ici en nitrure de titane. Elle est avantageusement déposée de façon conforme pour accroître le couplage thermique de l'absorbeur 70 avec le transducteur thermique, comme cela est représenté ici, mais cela n'est pas indispensable. Elle peut par exemple présenter une ou plusieurs discontinuités dans l'évidemment pratiqué dans la couche sacrificielle supérieure 202 au cours de l'étape de la figure 2C.

Ainsi le feuillet absorbant, et notamment la couche métallique 210, emprisonne le plot central 202.1 dans un volume fermé destiné à être l'intérieur de la chambre close 90. Dans cet exemple, le feuillet absorbant comporte dans l'ordre suivant la direction +Z, la couche isolante inférieure, la couche métallique 210 et la couche isolante supérieure.

La couche métallique 210 en TiN a par exemple une épaisseur comprise entre 5 nm et 25 nm. La couche isolante inférieure a par exemple une épaisseur comprise entre 5 nm et 150 nm. La couche isolante supérieure a par exemple une épaisseur comprise entre 15 nm et 150 nm.

En figure 2E, on forme l'absorbeur 70 par une structuration de la couche métallique 210. Pour cela, on grave localement de part en part le feuillet absorbant selon la forme souhaitée de l'absorbeur 70. Ce dernier comporte la région d'appui 70.3 située à l'intérieur de l'évidement. Elle entoure le plot central 202.1. La région centrale 70.4 recouvre intégralement le plot central 202.1, et s'étend parallèlement au plan (X, Y). L'essentiel de la partie de la couche métallique formant l'absorbeur 70 est destiné à être exposée au rayonnement électromagnétique à détecter, et à en absorber une partie. L'absorbeur 70 est ainsi configuré pour s'échauffer par absorption de ce rayonnement électromagnétique. Il constitue une surface courbe de l'espace d'épaisseur sensiblement constante.

La face supérieure de la couche sacrificielle supérieure 202 peut ne pas être rigoureusement plane en raison d'une différence d'épaisseur entre la micro-planche 80 et les bras d'isolation thermique 60 ou d'espacements entre leurs branches, ou entre un bras d'isolation thermique 60 et la micro-planche 80. La région intermédiaire 70.2 correspond à la région de l'absorbeur 70 reposant sur une partie de la face supérieure de la couche sacrificielle supérieure 202, qui entoure la tranchée en périphérie du détecteur thermique 1, et dont le relief est influencée par la présence de la micro-planche 80. La région périphérique 70.1 correspond à la portion de l'absorbeur 70 complémentaire à l'union des régions intermédiaire 70.2, d'appui 70.3 et centrale 70.4. La région intermédiaire 70.2 est ici majoritairement surélevée par rapport à la région périphérique 70.1, c'est-à-dire qu'elle est plus éloignée du substrat de lecture 10 que cette dernière.

Il est possible d'effectuer une étape optionnelle de planarisation de la couche sacrificielle supérieure 202, entre l'étape de la figure 2B et celle de la figure 2C, de manière à obtenir une surface supérieure de la couche sacrificielle supérieure 202 sensiblement plane et parallèle au plan (X, Y) et au réflecteur 20. Les régions périphérique, intermédiaire et d'appui 70.1, 70.2, 70.3 résultantes sont alors sensiblement coplanaires. Le cas échéant, la région intermédiaire 70.2 est définie comme la région de l'absorbeur 70 entourant la région d'appui 70.3, située à l'aplomb de la micro-planche 80.

A l'issue de la figure 2E, le plot central 202.1 est emprisonné dans le volume fermé définissant la chambre close 90.

En figure 2F, on retire les couches sacrificielles inférieure 201 et supérieure 202, sélectivement par rapport aux éléments constitutifs du détecteur thermique 1, dont les couches isolantes inférieure et supérieure, les couches support 181 et conductrice 182, l'encapsulation structurée 183 et supérieure 186. Ainsi, le plot central 202.1 est protégé par la chambre close 90 lors du retrait des couches sacrificielles inférieure 201 et supérieure 202.

Il est possible de graver ces couches par un plasma d'oxygène si elles sont en polyimide. Dans notre exemple de procédé, les couches sacrificielles inférieure et supérieure 201, 202 sont gravées par de l'acide fluorhydrique (HF) en phase vapeur. A l'issue de l'étape de la figure 2F, on obtient le détecteur thermique 1.

A présent, un deuxième procédé de fabrication d'un détecteur thermique 1 tel qu'illustré sur la figure 1B va être décrit.

Dans un premier temps, on fournit la structure initiale 5 de la figure 2A. Ensuite, on réalise l'étape de la figure 2B. Le deuxième procédé de fabrication se poursuit par la sous-étape de la figure 3A.

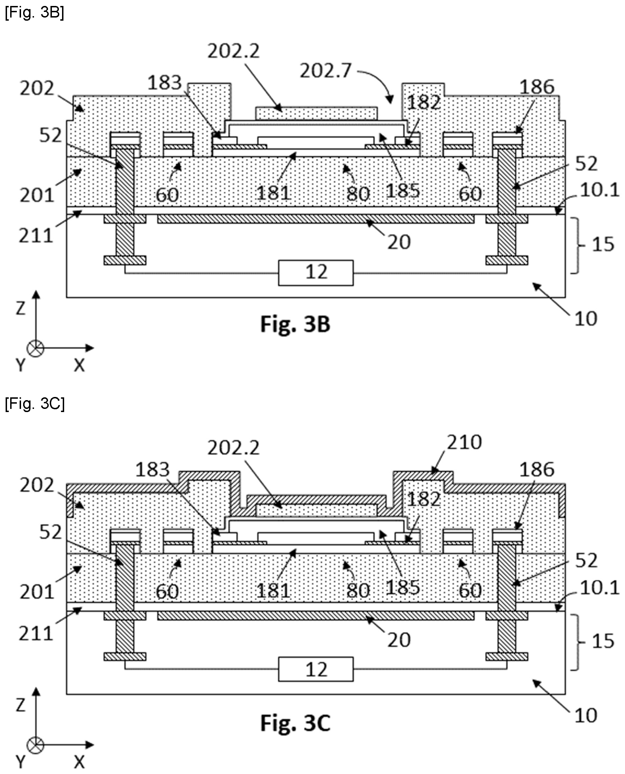

Les figures 3A et 3B correspondent à deux sous-étapes de formation d'un plot central 202.2 et d'un évidement dans la couche sacrificielle supérieure 202. L'évidement correspond à la région de la couche sacrificielle supérieure 202 qui a été retirée au cours de ces deux sous-étapes.

Dans un premier temps (figure 3A), on grave localement en regard de la micro-planche 80, une cuvette 202.6 dans la couche sacrificielle supérieure 202 s'étendant depuis sa face supérieure sans atteindre la micro-planche 80. La cuvette 202.6 a une forme quelconque en vue de dessus. Dans cet exemple, elle a une forme sensiblement carrée ou rectangulaire.

Dans un deuxième temps (figure 3B), on grave une tranchée 202.7 traversant de part en part la couche sacrificielle supérieure 202 en regard de la micro-planche 80, jusqu'à atteindre l'encapsulation supérieure 186, sans la dépasser. La tranchée 202.7 entoure la cuvette 202.6 en vue de dessus. De préférence, comme ici, la tranchée 202.7 suit le pourtour de la cuvette 202.6. A l'issue de la sous-étape de la figure 3B, on obtient un plot central 202.2 en contact de l'encapsulation supérieure 186. Le plot central 202.2 consiste en une partie restante et amincie de la couche sacrificielle supérieure 202, désolidarisée par la formation de l'évidement.

En figure 3C, on procède au dépôt du feuillet absorbant selon les mêmes modalités et possibilités que celles décrites en lien avec l'étape de la figure 2D. Tout comme en figure 2D, la couche métallique 210 peut être revêtue d'une couche isolante inférieure et/ou une couche isolante supérieure sur l'une ou l'autre de ses faces. Celles-ci ne sont pas représentées sur la figure 3C. Au moins une des couches constitutives du feuillet absorbant est déposée de façon conforme,

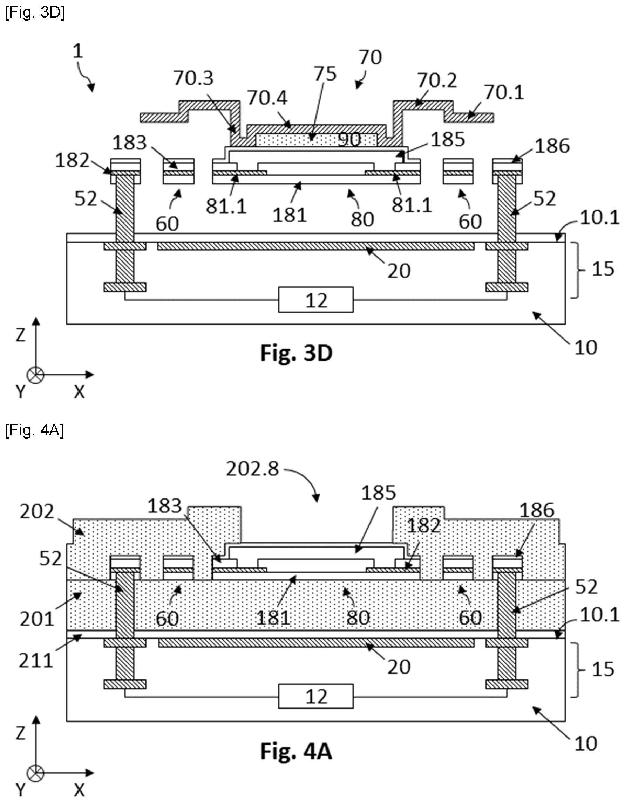

En figure 3D, on forme l'absorbeur 70 de la même façon qu'en figure 2E. On retire ensuite les couches sacrificielles inférieure et supérieure 201, 202 selon les mêmes modalités et possibilités que celles décrites en lien avec la figure 2F. On obtient ainsi un détecteur thermique 1 similaire à celui de la figure 1B.

A présent, un troisième procédé de fabrication d'un détecteur thermique 1 va être décrit. Cela peut être un détecteur thermique 1 tel qu'illustré sur la figure 1B. Pour celui-ci, le matériau de remplissage 75 n'est pas nécessairement réalisé dans le même matériau que la couche sacrificielle supérieure 202. Il peut être avantageux dans le cas où le matériau de la couche sacrificielle supérieure 202 présente une raie ou une bande d'absorption dans la gamme de longueurs d'onde du rayonnement électromagnétique. A titre d'exemple, l'oxyde de silicium absorbe pour certaines longueurs d'onde des infrarouges lointains.

Dans un premier temps, on fournit la structure initiale 5 de la figure 2A. Ensuite, on réalise l'étape de la figure 2B. Le deuxième procédé de fabrication se poursuit par l'étape de la figure 4A.

En figure 4A, on grave localement une ouverture traversante 202.8 dans la couche sacrificielle supérieure 202 s'étendant en regard de la micro-planche 80, depuis la face supérieure de la couche sacrificielle supérieure 202 jusqu'à l'encapsulation supérieure 186. L'ouverture traversante 202.8 peut avoir une forme quelconque en vue de dessus. Elle a des dimensions suffisantes pour accueillir un plot central 203.3 destiné à devenir le matériau de remplissage 75 du détecteur thermique 1. Elle est entièrement située à l'aplomb de la micro-planche 80. Elle a ici, en vue de dessus, une forme sensiblement carrée ou rectangulaire.

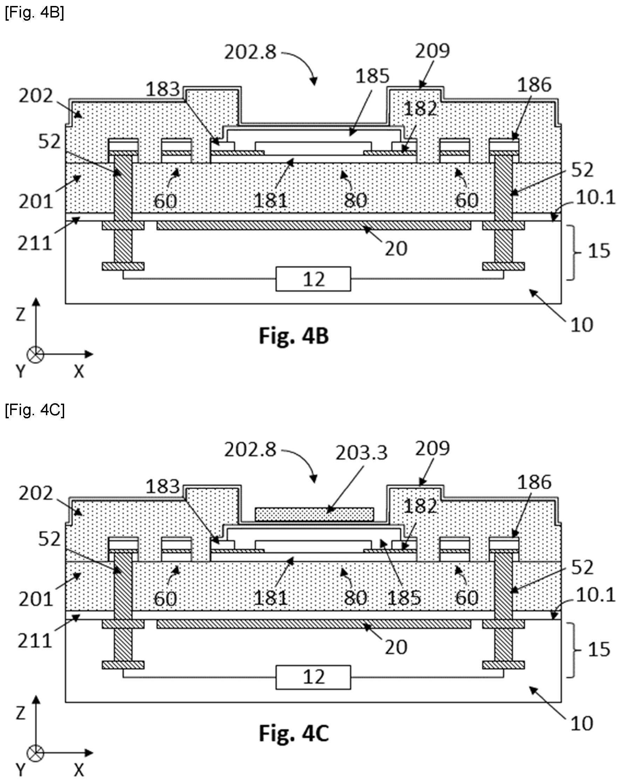

En figure 4B, on dépose de façon conforme une couche isolante conforme 209 sur la couche sacrificielle supérieure 202 et dans l'ouverture traversante 202.8. Il peut s'agir par exemple d'une couche en nitrure d'aluminium ou en alumine. La couche isolante conforme 209 a par exemple une épaisseur comprise entre 10 nm et 100 nm. Elle est en contact avec la face supérieure de la couche sacrificielle supérieure 202, les flancs de l'ouverture traversante 202.8 et avec l'encapsulation supérieure 186 à l'intérieur de l'ouverture traversante 202.8.

En figure 4C, on forme le plot central 203.3 à l'intérieur de l'ouverture traversante 202.8. Pour cela, on dépose une couche d'apport du matériau de remplissage 75, au contact de la couche isolante conforme 209, sur la couche sacrificielle supérieure 202 et sur l'encapsulation supérieure 186 à l'intérieur de l'ouverture traversante 202.8. On la grave ensuite localement, à la forme et l'emplacement souhaité pour obtenir le plot central 203.3. Ce dernier est une partie résiduelle de la couche de matériau de remplissage 75 située sur la micro-planche 80, en contact avec l'encapsulation supérieure 186 par l'intermédiaire de la couche isolante conforme 209. Il est situé à distance des flancs de l'ouverture traversante 202.8 de sorte à être ultérieurement enfermé dans la chambre close 90.

Ce mode de réalisation offre une grande liberté quant au choix du matériau de remplissage 75. Il peut être différent d'un matériau constitutif de la couche sacrificielle supérieure 202. Il est de préférence un matériau ne comportant pas de bandes d'absorption correspondant à une longueur d'onde du rayonnement électromagnétique à détecter. Dans la gamme des infrarouges lointain, il peut être en silicium amorphe ou polycristallin, non intentionnellement dopé, en carbone amorphe, ou en germanium.

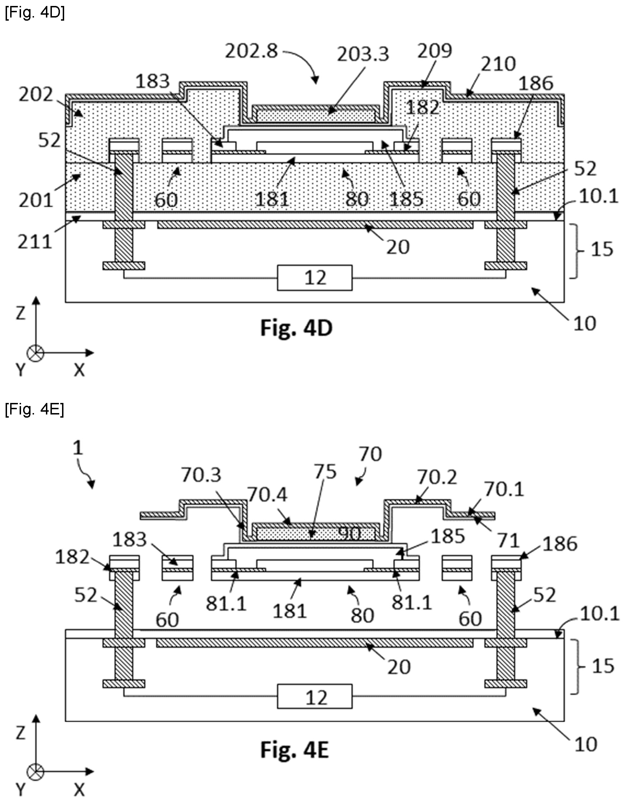

En figure 4D, on procède au dépôt du feuillet absorbant selon les mêmes modalités et possibilités que celles décrites en lien avec l'étape de la figure 2D. Tout comme en figures 2D et 3C, la couche métallique 210 peut être revêtue d'une couche isolante inférieure et/ou une couche isolante supérieure sur l'une ou l'autre de ses faces. Sur la figure 4D, la couche métallique 210 est entièrement revêtue d'une couche isolante supérieure non représentée, sur sa face supérieure. La couche métallique 210 est partiellement revêtue de la couche isolante conforme 209 sur l'intégralité de la partie de sa face inférieure qui entoure au plus près le plot central 203.3. Le reste de la couche isolante conforme 209 est intercalé entre le plot central 203.3 et l'encapsulation supérieure 186. Au moins une des couches constitutives du feuillet absorbant est déposée de façon conforme. La couche métallique 210 est déposée de préférence de façon conforme, sans que cela soit absolument nécessaire.

En figure 4E, on forme l'absorbeur 70 de la même façon qu'en figures 2E et 3D. La couche isolante conforme 209 est gravée au cours de cette étape ou à la suite, de manière à ne conserver qu'une portion isolante 71 située au droit de l'absorbeur 70, entre celui-ci et la micro-planche 80. Pour effectuer cette gravure, l'absorbeur 70 peut être utilisé comme masque dur. La portion isolante 71 est d'un seul tenant. En sa périphérie, elle revêt les régions périphérique 70.1 et intermédiaire 70.2, ainsi qu'une partie externe de la région d'appui 70.3. En son centre, elle s'étend sur la micro-planche 80 de manière à être en contact avec celle-ci.

Une zone de transition de sa partie centrale faisant la jonction avec sa partie périphérique, est en contact à la fois avec l'absorbeur 70 et la micro-planche 80, sur l'encapsulation supérieure 186, de sorte à fermer hermétiquement la chambre close 90. La chambre close 90 est ainsi délimitée par la région centrale 70.4 sur sa paroi supérieure, par la portion isolante 71 sur sa paroi inférieure et par la région d'appui 70.3 sur ses flancs latéraux.

On retire ensuite les couches sacrificielles inférieure et supérieure 201, 202 selon les mêmes modalités et possibilités que celles décrites en lien avec les figures 2F et 3D. On obtient ainsi un détecteur thermique 1 similaire à celui de la figure 1B.

Des modes de réalisation particuliers viennent d'être décrits. Différentes variantes et modifications apparaîtront à la personne du métier. L'absorbeur 70 peut par exemple coopérer avec la micro-planche 80 pour former plusieurs chambres closes 90. Pour cela, la tranchée des premier et deuxième procédés de fabrication peut avoir une forme de quadrillage en vue dessus ; et on peut réaliser plusieurs plots avec le troisième procédé de fabrication. Il est possible de modifier les deuxième et troisième procédés de fabrication pour réaliser des chambres closes 90 de hauteurs différentes, mesurées parallèlement à l'axe Z. Similairement, il est possible de former plusieurs cuvettes, éventuellement de hauteurs différentes avec le deuxième procédé.

## Revendications

1. Détecteur thermique (1) pour détecter un rayonnement électromagnétique, comportant :
∘ un substrat de lecture (10) ;
∘ des bras d'isolation thermique (60) ;
∘ une micro-planche (80) suspendue au-dessus du substrat de lecture (10) par les bras d'isolation thermique (60), comprenant un transducteur thermique, les bras d'isolation thermique (60) et la micro-planche (80) s'étendant dans un plan de détection du détecteur thermique (1) ;
∘ un absorbeur (70) couplé thermiquement au transducteur thermique, coopérant avec la micro-planche (80) pour former une chambre close (90) du détecteur thermique (1), intégralement remplie d'un matériau de remplissage (75) électriquement isolant ;
le détecteur thermique (1) étant tel que l'absorbeur (70) comporte une région périphérique (70.1), et une région centrale (70.4) s'étendant toutes deux parallèlement au plan de détection, la région centrale (70.4) en vis-à-vis de la chambre close (90) et la région périphérique (70.1) en vis-à-vis des bras d'isolation thermique (60).

2. Détecteur thermique (1) selon la revendication 1, comportant en outre un réflecteur (20) s'étendant parallèlement au plan de détection sur ou dans le substrat de lecture (10), en vis-à-vis de l'absorbeur (70) et formant avec la région périphérique (70.1) ou la région centrale (70.4), une cavité optique quart d'onde pour une longueur d'onde du rayonnement électromagnétique.

3. Détecteur thermique (1) selon la revendication 2, dans lequel la région centrale (70.4) s'étend dans un plan distinct de celui de la région périphérique (70.1) de sorte à compenser une différence de chemins optiques entre ces deux régions et le réflecteur (20).

4. Détecteur thermique (1) selon l'une quelconque des revendications précédentes, comportant une portion isolante (71) en un matériau électriquement isolant, revêtant la région périphérique (70.1), dans lequel la chambre close (90) est délimitée par une partie centrale de la portion isolante (71).

5. Détecteur thermique (1) selon l'une quelconque des revendications précédentes, dans lequel le matériau de remplissage (75) ne comporte pas de pic d'absorption pour une longueur d'onde du rayonnement électromagnétique.

6. Détecteur thermique (1) selon l'une quelconque des revendications précédentes, dans lequel les bras d'isolation thermique (60) et la micro-planche (80) comportent au moins une couche structurée commune.

7. Capteur d'image thermique comportant une pluralité de détecteurs thermiques selon l'une quelconque des revendications 1 à 6, agencés en matrice de pas inférieur ou égal à 8,5 µm.

8. Procédé de fabrication d'un détecteur thermique (1) selon l'une quelconque des revendications 1 à 6 comprenant :
∘ une étape de fourniture d'une structure initiale (5) comportant un substrat de lecture (10), une couche sacrificielle inférieure (201) reposant sur le substrat de lecture (10), une micro-planche (80) et des bras d'isolation thermique (60), la micro-planche (80) et les bras d'isolation thermique (60) s'étendant sur une face supérieure de la couche sacrificielle inférieure (201) opposée au substrat de lecture (10),
∘ une étape de dépôt d'une couche sacrificielle supérieure (202) sur la couche sacrificielle inférieure (201), la micro-planche (80) et les bras d'isolation thermique (60),
∘ une étape de formation d'un plot central (202.1, 202.2, 203.3) du matériau de remplissage (75) reposant sur la micro-planche (80), l'étape de formation comportant une sous-étape de gravure d'un évidement dans la couche sacrificielle supérieure (202) à l'intérieur duquel le plot central (202.1, 202.2, 203.3) est agencé de façon à être à distance de flancs latéraux de celui-ci,
∘ une étape de dépôt d'un feuillet absorbant comportant une couche métallique (210) sur la couche sacrificielle supérieure (202) et le plot central (202.1, 202.2, 203.3), de sorte à emprisonner le plot central (202.1, 202.2, 203.3) dans un volume fermé destiné à être l'intérieur de la chambre close (90),
∘ une étape de structuration du feuillet absorbant pour former l'absorbeur (70),
∘ une étape de retrait des couches sacrificielles inférieure et supérieure (201, 202) au cours de laquelle le plot central (202.1, 202.2, 203.3) est protégé par la chambre close (90).

9. Procédé de fabrication selon la revendication 8, dans lequel la sous-étape de gravure de l'évidement conduit à la formation d'une tranchée bouclant sur elle-même, traversant de part en part la couche sacrificielle supérieure (202), de sorte à définir des flancs du plot central (202.1, 202.2).

10. Procédé de fabrication selon la revendication 9, dans lequel le plot central (202.2) est aminci préalablement à l'étape de dépôt du feuillet absorbant.

11. Procédé de fabrication selon la revendication 8, dans lequel l'étape de formation du plot central (203.3) comporte une sous-étape de dépôt d'une couche d'apport en un matériau diélectrique ou semiconducteur non intentionnellement dopé, différent d'un matériau constitutif de la couche sacrificielle supérieure (202), suivie d'une sous-étape de structuration du plot central (203.3) dans la couche d'apport.

12. Procédé de fabrication selon la revendication **11,** dans lequel la couche d'apport est en silicium amorphe ou polycristallin, et dans lequel l'étape de formation du plot central (203.3) comporte une sous-étape de dépôt conforme d'une couche isolante conforme (209) en un matériau isolant électrique, sur la couche sacrificielle supérieure (202) et dans l'évidement, préalablement à la sous-étape de dépôt de la couche d'apport.

13. Procédé de fabrication selon l'une quelconque des revendications 8 à 12, et dans lequel le plot central (202.1, 202.2, 203.3) occupe au moins 80 % de la surface de la micro-planche (80).
